# EUROPEAN PATENT SPECIFICATION

(11) **EP 2 754 318 B1**
(45) Date of publication and mention of the grant of the patent: **25.09.2019**
(21) Application number: 12738217.4
(22) Date of filing: 02.07.2012
(51) Int. Cl.: H04W 48/18, H04W 48/10, H04W 88/06, H04L 12/54

(54) **METHOD AND APPARATUSES FOR WIRELESS COMMUNICATION AMONG DISPARATE DEVICES**
VERFAHREN UND VORRICHTUNGEN FÜR DRAHTLOSE KOMMUNIKATION ZWISCHEN UNTERSCHIEDLICHEN VORRICHTUNGEN
PROCÉDÉ ET DISPOSITIFS POUR DES COMMUNICATIONS SANS FIL ENTRE DES DISPOSITIFS DISPARATES

(30) Priority: 08.09.2011 US 201113227845
(43) Date of publication of application: 16.07.2014
(73) Proprietor: Telefonaktiebolaget LM Ericsson (publ), 164 83 Stockholm (SE)
(72) Inventor: LAPORTE, Pierre-Andre, Gatineau, QC J9J 0P2 (CA)
(74) Representative: Ericsson
(86) International application number: PCT/IB2012/053364
(87) International publication number: WO 2013/034992

(56) References cited:
- WO-A1-96/19887
- GB-A- 2 460 701
- US-A1- 2004 095 888
- US-A1- 2009 082 011

## Description

### FIELD

The present invention relates to communications and in particular to a method and system for managing communications between heterogeneous devices connected via a different network types.

### BACKGROUND

With the widespread availability of mobile broadband networks, local area networks (LANs), and personal area networks (PANs), an increasing number of electronic devices, including cars and home appliances, are equipped with communication transceivers compatible with one or more wireless communication standards. Major telecommunication companies envision that billions of devices and sensors will be wirelessly connected to networks within the next few decades.

The concept of having machines and objects connected to a network, with the possibility of direct connection between devices, is sometimes referred to as the Internet of Things (IoT). This is a third major milestone of telecommunications history, following connection of places and people.

The wireless connection of devices can be via the Internet, via a carrier network, via a LAN, directly from device to device via a PAN, e.g. via Bluetooth, Wireless Universal Serial Bus (USB), or via a combination of networks. What is needed is a way to efficiently coordinate, control and monitor the myriad of connected devices.

Document US 2009/082011 A1 may be construed to disclose a mobile device comprising a processor and a transceiver. The processor selects from a plurality of connection types for a user plane assisted global position system (AGPS) data transfer. Each connection type includes a priority level where a first selected connection type is based on the priority levels of the connection types. The transceiver establishes a connection to a wireless network using the selection connection type.

Document GB 2 460 701 A1 may be construed to disclose a roaming user equipment which identifies candidate relay nodes based on information contained in monitored signals, which may include a network identifier and/or an identifier of a destination node. The information may be located in a particular portion of the signal, for example a portion of the signal indicative of the destination and recognised as such by the user equipment. In this way, the user equipment can better ensure the robustness of a relay path. The user equipment may also adopt a similar approach to determine when a current communication link to the destination node can be reconfigured from an indirect link to a direct link.

Document WO 96/19887 A1 discloses a station monitoring activities of other stations in the network and storing connectivity information for use in subsequent transmissions.

Document US 2004/095888 A1 concerns a node of a network comprising a connectivity table containing addresses of other nodes with which communication can be established.

### SUMMARY

The present invention provides a method, a computer-readable medium and a device for managing communications between a plurality of heterogeneous devices according to the independent claims. Developments are set forth in the dependent claims.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a diagram of a plurality of devices interconnected through various network types in accordance with principles of the present invention;
FIG. 2 is a diagram of a plurality of devices connected to an online portal through overlapping and non-overlapping networks connected via the Internet in accordance with principles of the present invention;
FIG. 3 is a flow chart of an exemplary process for broadcasting a connectivity report used in connection with the present invention;
FIG. 4 is a flow chart of an exemplary process for updating a connectivity report in accordance with principles of the present invention;
FIG 5 is a flow chart of an exemplary process of establishing a communication link between devices; and
FIG. 6 is a flow chart of an exemplary process of using a relay device to establish a communication link between devices.

### DETAILED DESCRIPTION

The embodiments and/or examples disclosed in the following description which are not covered by the appended claims are considered as not being part of the invention. Before describing in detail exemplary embodiments that are in accordance with the present invention, it is noted that the embodiments reside primarily in combinations of apparatus components and processing steps related to establishing connectivity of a plurality of heterogeneous devices via one or more network types. Accordingly, the system and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

The present invention supports technologies such as BLUETOOTH, WiFi and 3GPP, among other technologies, in which a portal controls and monitors a plurality of connected devices. The connected devices may fall into one of a plurality of device categories. A lowest category, for example, may be an appliance category. Devices that fall into the appliance category may include a dishwasher, alarm system, heating and air conditioning, and other appliances. These devices only need to provide access to their control panels so that they may be remotely controlled and monitored. A second category of devices include those devices to and from which files are transmitted. Devices that fall into this second category include personal computers (PCs), laptop computers, tablet PCs, smart phones, televisions, home theaters, car computers and digital cameras.

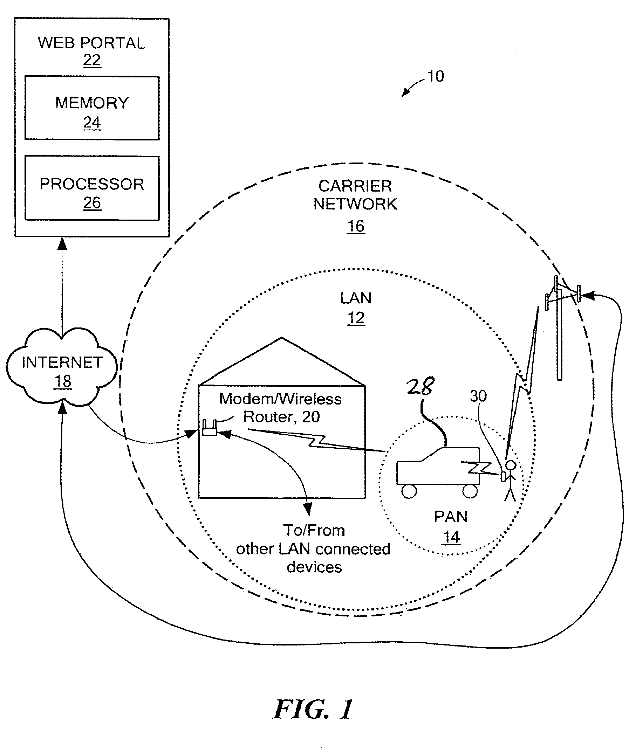

Referring now to the drawing figures, in which like reference designators denote like elements, there is shown in FIG. 1 a diagram of a plurality of devices interconnected via various networks in accordance with principles of the present invention, generally denoted as system "10." System 10 may include one or more LANs 12, one or more PANs 14, one or more carrier networks 16, one or more wide area networks (WANs) (not shown) and the Internet 18. The LAN 12 may connect to the Internet and other devices via a modem and/or wireless router 20.

FIG. 1 also shows a web portal 22 having a memory 24 in communication with a processor 26. The size and capacity of memory 24 and processor 26 can be based on the expected load and desired performance of web portal 22. The web portal is connected to the other networks via the Internet using a network interface (not shown). In one embodiment, each device connected to, i.e., in communication with, one or more networks runs a software application that runs in the background and communicatively connects the device to the web portal 22. The web portal 22 maintains a status of each device connected to at least one of the plurality of networks such as the networks shown in FIG. 1. Each device can obtain the status of other devices via the web portal 22. All devices are able to update their status to the web portal 22. Status may include, whether a device is active or inactive, the bandwidth required to communicate with the device, whether a device is connected to a network, the identity of the network, whether a device needs maintenance, whether a device is willing and able to act as a relay, and the like.

The PAN 14 is shown as including a vehicle 28 and a portable wireless device 30. The PAN network may be characterized as a network providing direct connectivity between nearby devices without an intermediary access point.

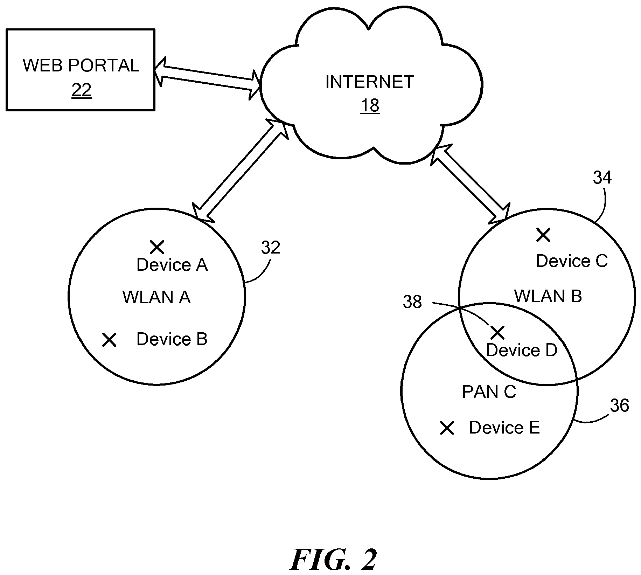

FIG. 2 is a diagram of a plurality of devices connected to the online portal 22 through overlapping and non-overlapping networks connected via the Internet in accordance with principles of the present invention. The Internet 18 is connected to the web portal 22 as shown in FIG. 1. The Internet 18 is also connected directly to a first wireless LAN (WLAN A) 32, and to a second wireless LAN (WLAN B) 34. The Internet 18 may also be connected indirectly to a PAN C 36 via the WLAN B 34. The WLAN A 32 may have a plurality of heterogeneous devices connected thereto, such as devices A and B. Similarly, the WLAN B 34 may have connected a plurality of heterogeneous devices such as device C and device D. Also, the PAN C 36 may have connected thereto devices D 38 and E. In the configuration of FIG. 2, a device such as device D 38 may be connected to more than one network. Note that the arrangements of FIG. 1 and FIG. 2 are exemplary. Other network configurations may exist or be implemented that differ from the topologies shown in FIG. 1 and FIG. 2.

The web portal 22 maintains a connectivity report in the memory 24 (FIG. 1). The connectivity report includes an identity of each device connected to a network, an identity of each network to which a device is connected and a bandwidth available from each network. An example of such a connectivity report for the network configuration of FIG. 2 is shown in Table 1.

| Device Identification | Connectivity | Bandwidth |
|---|---|---|
| Device A | Connected to WLAN A | Bandwidth A |
| Device B | Connected to WLAN A | Bandwidth A |
| Device C | Connected to WLAN B | Bandwidth B |
| Device D | Connected to WLAN B | Bandwidth B |
| Device D | Connected to device E on PANC | Bandwidth C |
| Device E | Connected to device D on PANC | Bandwidth C |

The connectivity report is broadcast to each device connected to a network so that each device can determine for itself what networks to use to connect to another device. For example, Device B can determine from the connectivity report that it can connect to device A via the WLAN A 32 without accessing the Internet. Device E cannot connect directly to the Internet. However, device D 38 can report that device E is connected in the PAN. Similarly, device B can determine that it can connect to device E by using device D as a relay, provided that each link has available bandwidth for the connection.

For example, if device B intends to send a high-definition video program to device E in real time, each of the links between device B and device E, including device D must have sufficient bandwidth available. Conversely, if device B intends to merely determine the status of device E, the required bandwidth is much lower. For device B to connect to device E, device D must be willing and able to act as a relay. If device D is willing and able to act as a relay, device D informs the web portal 22, and also broadcasts its willingness to act as a relay to all the other devices in the PAN C 36.

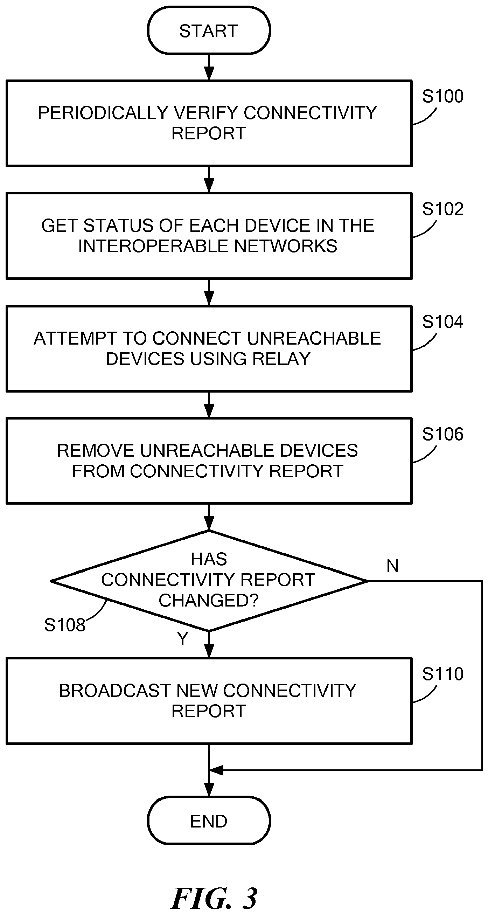

FIG. 3 is a flow chart of an exemplary process for broadcasting a connectivity report used in connection with the present invention. As mentioned above, devices in the network execute an application that enables communication and synchronization with the web portal 22. The web portal 22 periodically enters a mode to verify the connectivity report (step S100). The web portal 22 obtains the status of each device in the interoperable networks it monitors (step S102). The web portal 22 attempts to also obtain status of devices to which it cannot achieve a direct connection by using relay devices (step S 104). Unreachable devices are removed from the connectivity report (step S106). The web portal 22 determines if the connectivity report has changed (step S108). If so, the web portal 22 broadcasts a new connectivity report to devices it can reach (step S110).

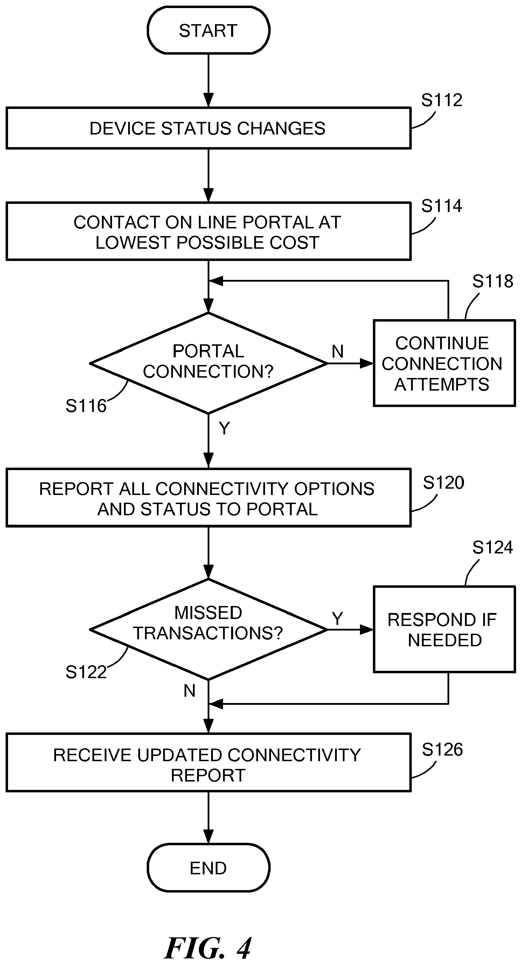

FIG. 4 is a flow chart of an exemplary process for updating a connectivity report in accordance with principles of the present invention. A connectivity report may be updated whenever status of a device, such as one of devices A, B, C, or D, changes (step S112). When a device status changes, the device contacts the web portal 22 using a lowest cost network (step S114). For example, the device may contact the web portal by a network other than a carrier network. A status change may include whether a device has been disconnected from a network, has increased or decreased bandwidth available, moves from an active mode to a sleep mode, and vice versa, etc.

The device determines if a connection with the portal can be obtained (step S116). If not, the device continues connection attempts (step S118). When a connection is obtained, the device reports all connectivity options and device status to the web portal 22 (step S120). Connectivity options include whether the device can function as a relay, and a list of the networks seen by the device. The device receives notice from the web portal 22 whether the device has missed any transactions when coming back from an offline period (step S122). Such transactions may include a file transfer or a change in state of an appliance requested by a user when the appliance is offline. If so, then the device provides a response, if needed, to the web portal 22 (step S 124). The device then receives the updated connectivity report (step S126).

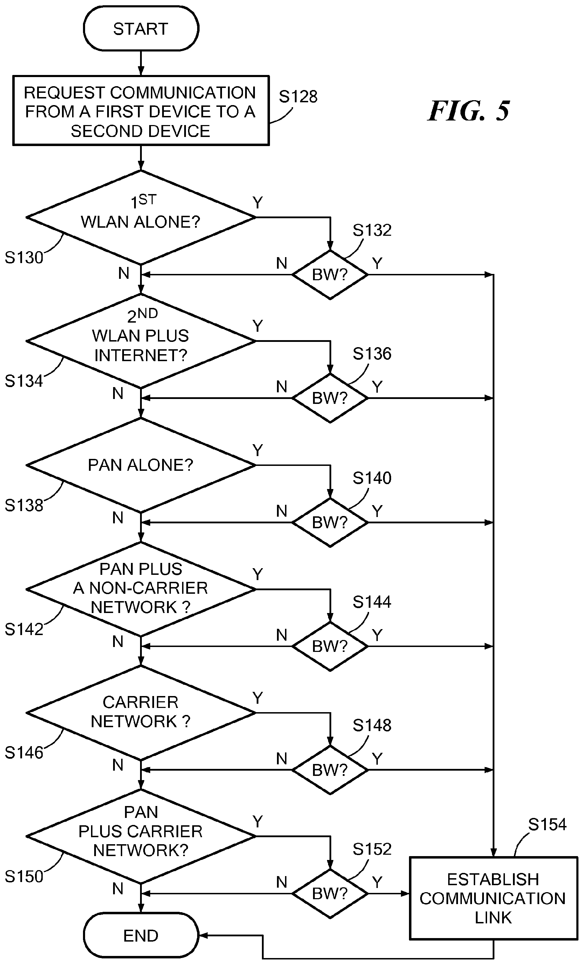

FIG. 5 is a flow chart of an exemplary process of establishing a communication link between devices. The process of FIG. 5 takes place within one of the plurality of heterogeneous devices connected to a network. A request for communication from a first device to a second device is initiated (step S128). The first device determines from the connectivity report that is stored in the memory of the device whether a first WLAN alone can complete the connection between the first device and the second device (step S130). If so, the first device determines from the connectivity report whether the first WLAN has sufficient bandwidth to support the communication between the first device and the second device (step S132). If so, then the communication link is established (step S154) via the first WLAN alone.

If the first WLAN alone cannot support the connection, the first device determines from the connectivity report if a combination of the first WLAN, a second WLAN and the Internet will support a connection between the first device and the second device (step S134). If so, then the first device determines from the connectivity report if the combination of the first WLAN, the second WLAN, and the Internet has sufficient bandwidth to support the connection (step S136). If so, then the communication link is established (step S154) via the first WLAN, the second WLAN, and the Internet.

If the combination of the first WLAN, the second WLAN, and the Internet cannot support the communication, the first device may determine from the connectivity report whether a PAN alone will support the communication (step S138). If so, the first device determines from the connectivity report whether the PAN has sufficient bandwidth to support the connection (step S140). If so, the communication link between the first and second device is established (step S154) using the PAN alone.
If the PAN alone cannot support the communication between the first device and the second device, the first device will determine if a combination of the PAN and another non-carrier network is available to support the communication (step S142). As used herein, the term "carrier network" refers to a network that charges a fee for its use. A non-carrier network does not charge a fee for its use. If the combination of the PAN and another non-carrier network is available to support the communication, then the first device determines from the connectivity report whether the combination has enough bandwidth to support the communication (step S144). If so, then the communication link is established (step S154) using the PAN and the other non-carrier network.

If the combination of the PAN and non-carrier network is not available, then the first device determines from the connectivity report whether a carrier network alone is available that can support the communication (step S146). If so, then the first device determines from the connectivity report whether the carrier network has sufficient bandwidth to support the communication (step S148). If so, then the communication link is established (step S154) using the carrier network alone.

If the communication cannot be established using the carrier network alone, the first device determines from the connectivity report whether a combination of the carrier network and a PAN can support the communication (step S150). If so, then the first device determines if the combination of the carrier network and the PAN has sufficient bandwidth to support the communication (step S152). If so, then the communication link is established (step S154) using the combination of the carrier network and the PAN.

Note that the hierarchy of network types depicted in FIG. 5 is exemplary of one embodiment of the invention. Other ranked hierarchies of network types may be implemented in other embodiments. For example, one such ranked hierarchy is as follows:
1. Direct WLAN connection
2. WLAN connection through the Internet
3. Direct PAN connection
4. PAN connection to WLAN relay
5. Combining multiple levels of PAN/WLAN relays
6. Carrier network connection
7. PAN connection to carrier network relay
8. Combining multiple levels of PAN relays and a carrier network.

In one embodiment, availability of lower cost network types is determined before availability of higher cost network types. For example, a configuration that uses a relay device may be preferred over a more direct route through a carrier network. Thus, in one embodiment, the processor of a device may search, based on the connectivity report, for a relay device to avoid use of the carrier network, or the processor of the device may search for a relay device because there is no other direct connection between the device and a second device in the networks. Further, a search for a network type to establish a communication link may be based on a past communication link. Thus, for example, a request to communicate from a first device to a second device may prompt the first device to determine if a previous connection between the two devices has been established in the past. If so, preference to the previous connection may be given.

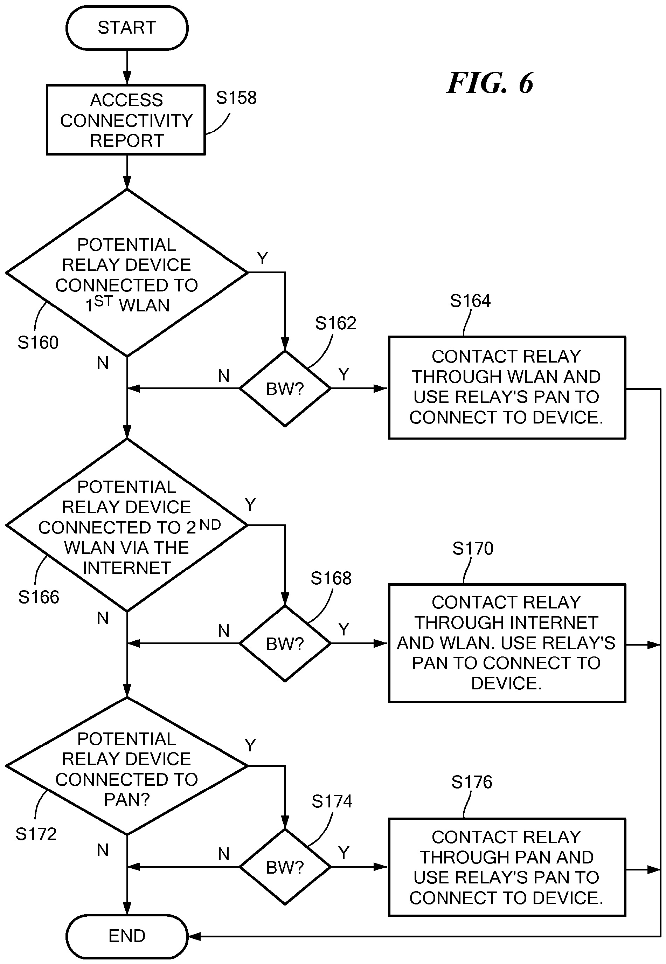

FIG. 6 is a flow chart of an exemplary process of using a relay device to establish a communication link between a first device and a second device. The process starts by the first device accessing a connectivity report received from the web portal 22 and stored in the memory of the device (step S158). The first device determines from the connectivity report whether a potential relay device is connected to a first WLAN (step S160). If so, then the first device determines from the connectivity report whether the potential relay device and the first WLAN network both have sufficient bandwidth to support the connection (step S162). If so, then the first device contacts the relay device via the WLAN and uses the relay device's PAN to connect to the second device (step S164).

If the combination of the first WLAN and the potential relay device can not support the connection between the first device and the second device, the first device determines from the connectivity report whether a combination of a second WLAN, the Internet, and a potential relay device, is available to support the communication (step S166). If so, then the first device determines from the connectivity report whether the combination of the second WLAN, the Internet, and the potential relay device has sufficient bandwidth to support the communication (step S168). If so, the second device is connected to the first device through the Internet, the second WLAN, and the PAN of the relay device (step S170).

If the combination of the second WLAN, the Internet and the potential relay device is not sufficient to support the communication between the first device and the second device, then the first device determines from the connectivity report whether the communication can be established using a relay device and the PAN of the relay device (step S172). If so, and if the bandwidth of the PAN and the relay device is sufficient (step S174), then the communication is established via the PAN and the relay device (step S176).

Thus, a plurality of devices may be interconnected by way of a plurality of networks according to a hierarchy, i.e., a ranked ordered list, of network types. The invention is not limited to the types of networks shown. The status of all the connected devices may be shared between devices and/or reported to a central location. For example, all the appliances and other devices associated with a user may report to a central location which can be accessed from the user's cell phone. Using the software on the cell phone, the user may determine which devices are to be activated and which devices are to be put to sleep.

Other advantages of the present invention may include redundancy, where more than one communication link is available to connect two devices. Also note that each device does not have to be connected to the Internet to establish a connection. Since a user may monitor which devices are operable from a central location, the user may conserve energy by putting unused devices in a sleep mode.

The present invention can be realized in hardware, or a combination of hardware and software. Any kind of computing system, or other apparatus adapted for carrying out the methods described herein, is suited to perform the functions described herein. A typical combination of hardware and software could be a specialized computer system, having one or more processing elements and a computer program stored on a storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or non-volatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings without departing from the scope of the invention, which is limited only by the following claims.

## Claims

1. A method of managing communications between a plurality of heterogeneous devices (30) connected to a plurality of networks, the method being performed in a first device of the plurality of heterogeneous devices and comprising:
receiving (S126), from a network portal (22), a connectivity report, the connectivity report including a list of the plurality of heterogeneous devices, at least one network type to which a device is connected and available bandwidth of each of the at least one network types;
storing the connectivity report;
determining (S130, S132, S134, S136, S138, S140, S142, S144, S146, S148, S150, S152) whether a communication link between the first device and a second device of the plurality of heterogeneous devices can be established via at least one of the network types in the connectivity report, including:
- determining (S132, S136, S140, S144, S148, S152) whether a selected one of a plurality of networks from a corresponding network type has sufficient bandwidth to support a desired level of communications between the first device and the second device; and
establishing (S154) a communication link between the first device and the second device via a highest ranked network type through which the communication link can be established.

2. The method of Claim 1, wherein the connectivity report of network types includes:
a first type including a first wireless local area network, WLAN (12), alone; and
a second type including a combination of a first WLAN (32), a second WLAN (34) and the Internet (18).

3. The method of Claim 2, wherein the connectivity report of network types further includes:
a third type including a personal area network, PAN (14), alone; and
a fourth type including a combination of a PAN (36) and an additional network (34) other than a PAN.

4. The method of Claim 3, wherein the connectivity report of network types further includes:
a fifth type including a carrier network (16) alone; and
a sixth type including a combination of a carrier network and an additional network other than a carrier network.

5. The method of Claim 4, wherein one of the fifth type and sixth type is selected when a network type that does not include the carrier network is not available.

6. The method of Claim 1, wherein:
the method further comprises determining whether a communication link between the first device and the second device can be established via at least one device functioning as a relay device.

7. The method of Claim 1, wherein the connectivity report is broadcast to a plurality of devices using the corresponding plurality of network types.

8. A computer readable medium containing computer executable instructions, that when executed by a processor, cause the processor to perform a method according to any one of the preceding claims.

9. A device (30) connected to at least one network type, the network type providing communications between a plurality of heterogeneous devices, the device being one of the plurality of heterogeneous devices and comprising:
a memory configured to store a connectivity report, the connectivity report including a list of the plurality of heterogeneous devices, at least one network type to which a device is connected and available bandwidth of each of the at least one network types; and
a processor in communication with the memory, the processor configured to:
- receive, from a network portal (22), a connectivity report, the connectivity report including a list of the plurality of heterogeneous devices, at least one network type to which a device is connected and available bandwidth of each of the at least one network types;
- store the connectivity report;
- determine whether a communication link between the device and a second device of the plurality of heterogeneous devices can be established via at least one of the network types in the connectivity report, including:
-- determining whether a selected one of a plurality of networks from a corresponding network type has sufficient bandwidth to support a desired level of communications between the first device and the second device; and
- establish a communication link between the device and the second device via a highest ranked network type through which the communication link can be established.

10. The device of Claim 9, wherein the plurality of network types includes at least one of:
a first wireless local area network, WLAN (12), alone; and
a combination of a first WLAN (32), a second WLAN (34) and the Internet (18).

11. The device of Claim 10, wherein the plurality of network types includes at least one of:
a personal area network, PAN (14), alone; and
a combination of multiple PAN networks; and
a combination of a PAN (36) and an additional network (34) other than a PAN.

12. The device of Claim 11, wherein the plurality of network types includes at least one of:
a carrier network (16) alone; and
a combination of a carrier network and an additional network other than a carrier network.

13. The device of Claim 9, wherein the processor is further configured to:
- determine if a relay device is connected to the at least one network type; and
- determine if a communication link can be established that includes the at least one network type and the relay device.

## Patentansprüche

1. Verfahren zur Verwaltung von Kommunikationen zwischen einer Mehrzahl von heterogenen Vorrichtungen (30), die mit einer Mehrzahl von Netzwerken verbunden ist, wobei das Verfahren in einer ersten Vorrichtung der Mehrzahl von heterogenen Vorrichtungen durchgeführt wird und umfasst:
Empfangen (S126) eines Konnektivitätsberichts von einem Netzwerkportal (22), wobei der Konnektivitätsbericht eine Liste der Mehrzahl von heterogenen Vorrichtungen, mindestens einen Netzwerktyp, mit dem eine Vorrichtung verbunden ist, und verfügbare Bandbreite eines jeden des mindestens einen Netzwerktyps umfasst;
Speichern des Konnektivitätsberichts;
Bestimmen (S130, S132, S134, S136, S138, S140, S142, S144, S146, S148, S150, S152), ob eine Kommunikationsverbindung zwischen der ersten Vorrichtung und einer zweiten Vorrichtung der Mehrzahl von heterogenen Vorrichtungen über mindestens einen der Netzwerktypen im Konnektivitätsbericht hergestellt werden kann, umfassend:
Bestimmen (S132, S136, S140, S144, S148, S152), ob ein ausgewähltes einer Mehrzahl von Netzwerken von einem entsprechenden Netzwerktyp genügend Bandbreite aufweist, um ein gewünschtes Niveau von Kommunikationen zwischen der ersten Vorrichtung und der zweiten Vorrichtung zu unterstützen; und
Herstellen (S154) einer Kommunikationsverbindung zwischen der ersten Vorrichtung und der zweiten Vorrichtung über einen höchstrangigen Netzwerktyp, durch welchen die Kommunikationsverbindung hergestellt werden kann.

2. Verfahren nach Anspruch 1, wobei der Konnektivitätsbericht von Netzwerktypen umfasst:
einen ersten Typ, der ein erstes drahtloses lokales Netzwerk, WLAN, (12) allein umfasst; und
einen zweiten Typ, der eine Kombination aus einem ersten WLAN (32), einem zweiten WLAN (34) und dem Internet (18) umfasst.

3. Verfahren nach Anspruch 2, wobei der Konnektivitätsbericht von Netzwerktypen ferner umfasst:
einen dritten Typ, der ein Netzwerk für den persönlichen Bereich, PAN, (14) allein umfasst; und
einen vierten Typ, der eine Kombination aus einem PAN (36) und einem zusätzlichen, anderen Netzwerk (34) als einem PAN umfasst.

4. Verfahren nach Anspruch 3, wobei der Konnektivitätsbericht von Netzwerktypen ferner umfasst:
einen fünften Typ, der ein Trägernetzwerk (16) allein umfasst, und
einen sechsten Typ, der eine Kombination aus einem Trägernetzwerk und einem zusätzlichen, anderen Netzwerk als einem Trägernetzwerk umfasst.

5. Verfahren nach Anspruch 4, wobei einer des fünften und sechsten Typs ausgewählt wird, wenn kein Netzwerktyp verfügbar ist, der nicht das Trägernetzwerk umfasst.

6. Verfahren nach Anspruch 1, wobei:
das Verfahren ferner ein Bestimmen umfasst, ob eine Kommunikationsverbindung zwischen der ersten Vorrichtung und der zweiten Vorrichtung über mindestens eine Vorrichtung hergestellt werden kann, die als eine Relaisvorrichtung fungiert.

7. Verfahren nach Anspruch 1, wobei der Konnektivitätsbericht unter Verwendung der entsprechenden Mehrzahl von Netzwerktypen per Broadcast an eine Mehrzahl von Vorrichtungen gesendet wird.

8. Computerlesbares Medium, das computerausführbare Anweisungen umfasst, die bei Ausführung durch einen Prozessor den Prozessor zum Durchführen eines Verfahrens nach einem der vorhergehenden Ansprüche veranlassen.

9. Vorrichtung (30), die mit mindestens einem Netzwerktyp verbunden ist, wobei der Netzwerktyp Kommunikationen zwischen einer Mehrzahl von heterogenen Vorrichtung bereitstellt, und die Vorrichtung eine der Mehrzahl von heterogenen Vorrichtungen ist und umfasst:
einen Speicher, der zum Speichern eines Konnektivitätsberichts konfiguriert ist, wobei der Konnektivitätsbericht eine Liste der Mehrzahl von heterogenen Vorrichtungen, mindestens einen Netzwerktyp, mit dem eine Vorrichtung verbunden ist, und verfügbare Bandbreite eines jeden des mindestens einen Netzwerktyps umfasst; und
einen Prozessor in Kommunikation mit dem Speicher, wobei der Prozessor konfiguriert ist zum:
- Empfangen eines Konnektivitätsberichts von einem Netzwerkportal (22), wobei der Konnektivitätsbericht eine Liste der Mehrzahl von heterogenen Vorrichtungen, mindestens einen Netzwerktyp, mit dem eine Vorrichtung verbunden ist, und verfügbare Bandbreite eines jeden des mindestens einen Netzwerktyps umfasst;
- Speichern des Konnektivitätsberichts;
- Bestimmen, ob eine Kommunikationsverbindung zwischen der Vorrichtung und einer zweiten Vorrichtung der Mehrzahl von heterogenen Vorrichtungen über mindestens einen der Netzwerktypen im Konnektivitätsbericht hergestellt werden kann, umfassend:
- Bestimmen, ob ein ausgewähltes einer Mehrzahl von Netzwerken von einem entsprechenden Netzwerktyp genügend Bandbreite aufweist, um ein gewünschtes Niveau von Kommunikationen zwischen der ersten Vorrichtung und der zweiten Vorrichtung zu unterstützen; und
- Herstellen einer Kommunikationsverbindung zwischen der Vorrichtung und der zweiten Vorrichtung über einen höchstrangigen Netzwerktyp, durch welchen die Kommunikationsverbindung hergestellt werden kann.

10. Vorrichtung nach Anspruch 9, wobei die Mehrzahl von Netzwerktypen mindestens eines umfasst von:
einem ersten drahtlosen lokalen Netzwerk, WLAN, (12) allein; und
einer Kombination aus einem ersten WLAN (32), einem zweiten WLAN (34) und dem Internet (18).

11. Vorrichtung nach Anspruch 10, wobei die Mehrzahl von Netzwerktypen mindestens eines umfasst von:
einem Netzwerk für den persönlichen Bereich, PAN, (14) allein; und
einer Kombination aus mehreren PAN-Netzwerken; und
einer Kombination aus einem PAN (36) und einem zusätzlichen, anderen Netzwerk (34) als einem PAN.

12. Vorrichtung nach Anspruch 11, wobei die Mehrzahl von Netzwerktypen mindestens eines umfasst von:
einem Trägernetzwerk (16) allein; und
einer Kombination aus einem Trägernetzwerk und einem zusätzlichen, anderen Netzwerk als einem Trägernetzwerk.

13. Vorrichtung nach Anspruch 9, wobei der Prozessor ferner konfiguriert ist zum:
- Bestimmen, ob eine Relaisvorrichtung mit dem mindestens einen Netzwerktyp verbunden ist; und
- Bestimmen, ob eine Kommunikationsverbindung hergestellt werden kann, die den mindestens einen Netzwerktyp und die Relaisvorrichtung umfasst.

## Revendications

1. Procédé de gestion de communications entre une pluralité de dispositifs hétérogènes (30) connectés à une pluralité de réseaux, le procédé étant effectué dans un premier dispositif de la pluralité de dispositifs hétérogènes et comprenant :
la réception (S126), en provenance d'un portail de réseau (22), d'un rapport de connectivité, le rapport de connectivité incluant une liste de la pluralité de dispositifs hétérogènes, au moins un type de réseau auquel un dispositif est connecté et une largeur de bande disponible de chacun de l'au moins un type de réseau ;
la mémorisation du rapport de connectivité ;
la détermination (S130, S132, S134, S136, S138, S140, S142, S144, S146, S148, S150, S152) si une liaison de communications entre le premier dispositif et un deuxième dispositif de la pluralité de dispositifs hétérogènes peut ou non être établie par l'intermédiaire d'au moins l'un des types de réseau dans le rapport de connectivité, incluant :
la détermination (S132, S136, S140, S144, S148, S152) si l'un sélectionné d'une pluralité de réseaux à partir d'un type de réseau correspondant a ou non une largeur de bande suffisante pour prendre en charge un niveau souhaité de communications entre le premier dispositif et le deuxième dispositif ; et
l'établissement (S154) d'une liaison de communications entre le premier dispositif et le deuxième dispositif par l'intermédiaire d'un type de réseau du rang le plus haut à travers lequel la liaison de communications peut être établie.

2. Procédé selon la revendication 1, dans lequel le rapport de connectivité de types de réseau inclut :
un premier type incluant un premier réseau local sans fil, WLAN, (12) seul ; et
un deuxième type incluant une combinaison d'un premier WLAN (32), d'un deuxième WLAN (34) et de l'Internet (18) .

3. Procédé selon la revendication 2, dans lequel le rapport de connectivité de types de réseau inclut en outre :
un troisième type incluant un réseau personnel, PAN, (14) seul ; et
un quatrième type incluant une combinaison d'un PAN (36) et d'un réseau supplémentaire (34) autre qu'un PAN.

4. Procédé selon la revendication 3, dans lequel le rapport de connectivité de types de réseau inclut en outre :
un cinquième type incluant un réseau porteur (16) seul ; et
un sixième type incluant une combinaison d'un réseau porteur et d'un réseau supplémentaire autre qu'un réseau porteur.

5. Procédé selon la revendication 4, dans lequel l'un du cinquième type et du sixième type est sélectionné lorsqu'un type de réseau qui n'inclut pas le réseau porteur n'est pas disponible.

6. Procédé selon la revendication 1, dans lequel le procédé comprend en outre la détermination si une liaison de communications entre le premier dispositif et le deuxième dispositif peut ou non être établie par l'intermédiaire d'au moins un dispositif fonctionnant en tant qu'un dispositif relais.

7. Procédé selon la revendication 1, dans lequel le rapport de connectivité est diffusé à une pluralité de dispositifs en utilisant la pluralité correspondante de types de réseau.

8. Support lisible par ordinateur contenant des instructions exécutables par ordinateur qui, lorsqu'elles sont exécutées par un processeur, amènent le processeur à effectuer un procédé selon l'une quelconque des revendications précédentes.

9. Dispositif (30) connecté à au moins un type de réseau, le type de réseau fournissant des communications entre une pluralité de dispositifs hétérogènes, le dispositif étant l'un de la pluralité de dispositifs hétérogènes et comprenant :
une mémoire configurée pour mémoriser un rapport de connectivité, le rapport de connectivité incluant une liste de la pluralité de dispositifs hétérogènes, au moins un type de réseau auquel un dispositif est connecté et une largeur de bande disponible de chacun de l'au moins un type de réseau ; et
un processeur en communication avec la mémoire, le processeur étant configuré pour effectuer :
- la réception, en provenance d'un portail de réseau (22), d'un rapport de connectivité, le rapport de connectivité incluant une liste de la pluralité de dispositifs hétérogènes, au moins un type de réseau auquel un dispositif est connecté et une largeur de bande disponible de chacun de l'au moins un type de réseau ;
- la mémorisation du rapport de connectivité ;
- la détermination si une liaison de communications entre le premier dispositif et un deuxième dispositif de la pluralité de dispositifs hétérogènes peut ou non être établie par l'intermédiaire d'au moins l'un des types de réseau dans le rapport de connectivité, incluant :
- la détermination si l'un sélectionné d'une pluralité de réseaux à partir d'un type de réseau correspondant a ou non une largeur de bande suffisante pour prendre en charge un niveau souhaité de communications entre le premier dispositif et le deuxième dispositif ; et
- l'établissement d'une liaison de communications entre le premier dispositif et le deuxième dispositif par l'intermédiaire d'un type de réseau du rang le plus haut à travers lequel la liaison de communications peut être établie.

10. Dispositif selon la revendication 9, dans lequel la pluralité de types de réseaux inclut au moins l'un de :
un premier réseau local sans fil, WLAN, (12) seul ; et
une combinaison d'un premier WLAN (32), d'un deuxième WLAN (34) et de l'Internet (18).

11. Dispositif selon la revendication 10, dans la pluralité de types de réseaux inclut au moins l'un de :
un réseau personnel, PAN, (14) seul ; et
une combinaison de multiples réseaux PAN ; et
une combinaison d'un PAN (36) et d'un réseau supplémentaire (34) autre qu'un PAN.

12. Dispositif selon la revendication 11, dans lequel la pluralité de types de réseaux inclut au moins l'un de un réseau porteur (16) seul ; et
une combinaison d'un réseau porteur et d'un réseau supplémentaire autre qu'un réseau porteur.

13. Dispositif selon la revendication 9, dans lequel le processeur est en outre configuré pour :
- la détermination si un dispositif relais est connecté à l'au moins un type de réseau ; et
- la détermination s'il peut être établi une liaison de communications qui inclut l'au moins un type de réseau et le dispositif relais.
